# EUROPEAN PATENT APPLICATION

(11) **EP 4 517 678 A1**
(43) Date of publication of application: **05.03.2025**
(21) Application number: 23795189.2
(22) Date of filing: 20.04.2023
(51) Int. Cl.: G06T 17/00, G06T 7/521

(54) **IMAGE RECONSTRUCTION METHOD AND APPARATUS, AND DEVICE**

(30) Priority: 28.04.2022 CN 202210470232
(71) Applicant: Hangzhou Hikrobot Co., Ltd., Hangzhou, Zhejiang 310051 (CN)
(72) Inventor: ZHANG, Hualin, Hangzhou, Zhejiang 310051 (CN); LONG, Xuexiong, Hangzhou, Zhejiang 310051 (CN); CHANG, Xu, Hangzhou, Zhejiang 310051 (CN); SHENG, Hong, Hangzhou, Zhejiang 310051 (CN); LI, Genglei, Hangzhou, Zhejiang 310051 (CN); XI, Jiahao, Hangzhou, Zhejiang 310051 (CN); SUN, Yuandong, Hangzhou, Zhejiang 310051 (CN)
(74) Representative: Vogelbruch, Keang
(86) International application number: PCT/CN2023/089562
(87) International publication number: WO 2023/207756

(57) **Abstract**

An image reconstruction method and apparatus, and a device. The image reconstruction method comprises: when a multi-line laser device projects N beams of line-structured light to an object under test, acquiring a first original image which is collected by a first camera, and a second original image which is collected by a second camera (201); determining a first target image corresponding to the first original image and a second target image corresponding to the second original image (202); determining a first light stripe center line corresponding to each first light stripe area in the first target image, and a second light stripe center line corresponding to each second light stripe area in the second target image (203); determining a plurality of key point pairs on the basis of the first light strip center lines and the second light strip center lines, wherein each key point pair comprises a first pixel point in the first light stripe center line and a second pixel point in the second light stripe center line (204); determining three-dimensional points on the basis of the key point pairs and a camera calibration parameter (205); and generating a three-dimensional reconstructed image on the basis of the three-dimensional points corresponding to the plurality of key point pairs (206).

## Description

### TECHNICAL FIELD

The disclosure relates to the field of image processing technologies, and in particular, to an image reconstruction method, apparatus, and device.

### BACKGROUND

A three-dimensional imaging device may include a laser and a camera, and the laser is used to project line-structured light onto a surface of a tested object (that is, a tested target), and the camera is used to shoot the tested object to obtain an image with the line-structured light, that is, a line-structured light image. After the line-structured light image is obtained, a light strip centerline of the line-structured light image may be obtained, and the light strip centerline is converted according to pre-calibrated sensor parameters to obtain spatial coordinates (i.e., three-dimensional coordinates) of the tested object at the current position. Three-dimensional reconstruction of the tested object can be realized based on the spatial coordinates of the tested object at the current position.

### SUMMARY

An embodiment of the disclosure provides an image reconstruction method, applied to a three-dimensional imaging device, where the three-dimensional imaging device includes a first camera, a second camera, and a multi-line laser, and the method includes:
in a case where the multi-line laser projects N lines of line-structured light onto a tested object, obtaining a first original image of the tested object captured by the first camera, and a second original image of the tested object captured by the second camera, where N is a positive integer greater than 1; and determining a first target image corresponding to the first original image and a second target image corresponding to the second original image, where the first target image includes N first light-emitting areas corresponding to the N lines of line-structured light, and the second target image includes N second light-emitting areas corresponding to the N lines of line-structured light;
determining a first light strip centerline corresponding to each of the first light-emitting areas in the first target image, and a second light strip centerline corresponding to each of the second light-emitting areas in the second target image;
determining a plurality of key point pairs based on all the first light strip centerlines and the second light strip centerlines, where for each of the plurality of key point pairs, the key point pair includes a first pixel in the first light strip centerline and a second pixel in the second light strip centerline, and the first pixel and the second pixel are pixels corresponding to a same location point on the tested object;
determining, for each of the plurality of key point pairs, a three-dimensional point corresponding to the key point pair based on the key point pair and camera calibration parameters;
generating a three-dimensional reconstructed image of the tested object based on the three-dimensional points corresponding to the plurality of key point pairs.
An embodiment of the disclosure provides an image reconstruction apparatus, applied to a three-dimensional imaging device, where the three-dimensional imaging device includes a first camera, a second camera, and a multi-line laser, and the apparatus includes:
an obtaining module, configured to: in a case where the multi-line laser projects N lines of line-structured light onto a tested object, obtain a first original image of the tested object captured by the first camera, and a second original image of the tested object captured by the second camera, wherein N is a positive integer greater than 1;
a determining module, configured to determine a first target image corresponding to the first original image and a second target image corresponding to the second original image, wherein the first target image includes N first light-emitting areas corresponding to the N lines of line-structured light, and the second target image includes N second light-emitting areas corresponding to the N lines of line-structured light; determine a first light strip centerline corresponding to each of the first light-emitting areas in the first target image, and a second light strip centerline corresponding to each of the second light-emitting areas in the second target image; determine a plurality of key point pairs based on all the first light strip centerlines and the second light strip centerlines, wherein for each of the plurality of key point pairs, the key point pair includes a first pixel in the first light strip centerline and a second pixel in the second light strip centerline, and the first pixel and the second pixel are pixels corresponding to a same location point on the tested object; and determine, for each of the plurality of key point pairs, a three-dimensional point corresponding to the key point pair based on the key point pair and camera calibration parameters; and
a generating module, configured to generate a three-dimensional reconstructed image of the tested object based on the three-dimensional points corresponding to the plurality of key point pairs.

An embodiment of the disclosure provides a three-dimensional imaging device, including a processor and a machine-readable storage medium, where the machine-readable storage medium stores machine-executable instructions executable by the processor; and the processor is configured to execute the machine-executable instructions, to implement the image reconstruction method disclosed in the foregoing embodiments of the disclosure.

In this embodiment of the disclosure, the multi-line laser projects N lines of line-structured light onto the tested object each time, where N is a positive integer greater than 1, for example, 7, 11, or 15, so that the line-structured light image captured by the camera each time includes N light strip centerlines, and the line-structured light image is equivalent to line-structured light images of N positions of the tested object, thereby reducing collection times of the line-structured light image and reducing time of three-dimensional reconstruction. When the multi-line laser scans the surface of the tested object, the whole contour data of the tested object can be quickly obtained, the three-dimensional image information of the tested object is output, and the detection precision and the detection speed are improved. The first camera and the second camera are used for simultaneously collecting the line-structured light images, and based on the line-structured light images captured by the two cameras, the three-dimensional information of the tested object can be obtained by using the triangulation method, namely, the depth information of the tested object can be obtained, so that the depth information on the multi-line laser is obtained by using an image captured at a single time, the single-time scanning efficiency can be improved by N times, and the full-size scanning of the whole contour of the tested object can be quickly realized.

### BRIEF DESCRIPTION OF DRAWINGS

FIG. 1A and FIG. 1B are schematic structural diagrams illustrating a three-dimensional imaging device according to an embodiment of the disclosure.
FIG. 1C and FIG. 1D are schematic diagrams illustrating a plurality of line lasers according to an embodiment of the disclosure.
FIG. 2 is a schematic flowchart illustrating an image reconstruction method according to an embodiment of the disclosure.
FIG. 3 is a schematic flowchart illustrating an image reconstruction method according to an embodiment of the disclosure.
FIG. 4 is a schematic diagram illustrating principles of a triangulation manner according to an embodiment of the disclosure.
FIG. 5 is a schematic flowchart illustrating an image reconstruction method according to an embodiment of the disclosure.
FIG. 6 is a schematic structural diagram illustrating an image reconstruction apparatus according to an embodiment of the disclosure.

### DETAILED DESCRIPTION

The terminology used in the embodiments of the disclosure is merely for the purpose of describing a specific embodiment, and is not intended to limit the disclosure. As used in the disclosure and the claims, the singular forms "a", "said", and "the" are also intended to include plural forms unless the context clearly indicates other meanings. It should also be understood that the term "and / or" as used herein refers to any or all possible combinations containing one or more associated listed items.

It should be understood that although the terms such as first, second, third, etc. may be used to describe various information in the embodiments of the disclosure, these information should not be limited to these terms. These terms are only used to distinguish the same type of information from each other. For example, without departing from the scope of the disclosure, the first information may also be referred to as second information, and similarly, the second information may also be referred to as first information. Further, depending on context, the word "if" used may be interpreted as "when" or "while" or "in response to a determination."

In order to obtain a three-dimensional reconstructed image, in related technologies, a surface-structured light projection method, a binocular speckle method, a TOF (Time of Flight) method, a single-line laser contour scanning method, and the like may be used. For the surface-structured light projection method, it can adopt a DLP (Digital Light Processing) or LCD (Liquid Crystal Display) projection technology. In the technology, an LED (Light-Emitting Diode) light source is used as a projection light source, which has a large projection volume, and a divergent energy. Under a large field of view and long distance, the large volume and power consumption are not conducive to three-dimensional positioning applications. For the binocular speckle method, it can use a laser speckle binocular matching method in combination with binocular disparity, which has a low detection precision and a poor edge contour, therefore not conducive to contour scanning and three-dimensional positioning applications. For the TOF method, due to restrictions of the resolution of a camera, the detection precision is at the cm level, and does not satisfy the automatic high-precision positioning applications. For the single-line laser contour scanning method, it uses single-line laser to scan the object to obtain the depth information of the object, where the scanning speed is low, the stability is poor, and the positioning requirements of three-dimensional reconstruction are not met.

Taking the single-line laser contour scanning method as an example, a laser may be used to project line-structured light onto the surface of the tested object, and a camera is used to shoot the tested object to obtain an image with the line-structured light, that is, a line-structured light image. After the line-structured light image is obtained, spatial coordinates (i.e., three-dimensional coordinates) of the tested object at the current position may be obtained based on the line-structured light image, to achieve three-dimensional reconstruction of the tested object. However, in order to realize the three-dimensional reconstruction of the tested object, it is necessary to collect line-structured light images of different positions of the tested object. That is, the laser projects the line-structured light to different positions of the tested object, and each position corresponds to one line-structured light image. Since the camera only collects a line-structured light image corresponding to one position at a time, the camera needs to collect the line-structured light image multiple times to complete three-dimensional reconstruction, that is, the time for the three-dimensional reconstruction is relatively long, the scanning speed is low, the stability is poor, and the positioning requirements of three-dimensional reconstruction are not met.

In view of this, an embodiment of the disclosure provides a three-dimensional imaging method for multi-line laser scanning, where depth information of a tested object may be obtained by using a triangulation method, a multi-line laser is used to form optical scanning on a surface of the tested object, entire contour data of the tested object may be quickly obtained, and three-dimensional image information of the tested object is output. The three-dimensional imaging method using multi-line laser scanning may be applied to the field of machine vision and industrial automation, and may be used to implement three-dimensional measurement and robot positioning, and the application scenario is not restricted thereto.

In this embodiment, the depth information of the tested object may be obtained by using a triangulation method, and the depth information on the multi-line laser, such as 10 lines and 20 lines, may be obtained at a single time, so that the single-time scanning efficiency may be improved by 10 -20 times, and then the multi-line laser is driven to scan, so as to implement full-size scanning of the entire contour of the tested object.

In the embodiment, the problems of a large volume, large power consumption and the like of the surface-structured light projection method can be solved, the problems of low detection precision, poor edge contour and the like of the binocular speckle method can be solved, the problems of low detection precision and the like of the TOF method can be solved, and the problems of low scanning speed, poor stability and the like of the single-line laser contour scanning method can be solved. In summary, the three-dimensional imaging method using multi-line laser scanning in this embodiment is a three-dimensional scanning imaging method with high precision, low cost, small volume and low power consumption, and the detection speed is higher and the detection precision is higher.

An embodiment of the disclosure provides a three-dimensional imaging method using multi-line laser scanning, which can be applied to a three-dimensional imaging device. The three-dimensional imaging device may be any device having a three-dimensional imaging function, for example, any device in the field of machine vision or industrial automation, and the type of the three-dimensional imaging device is not limited.

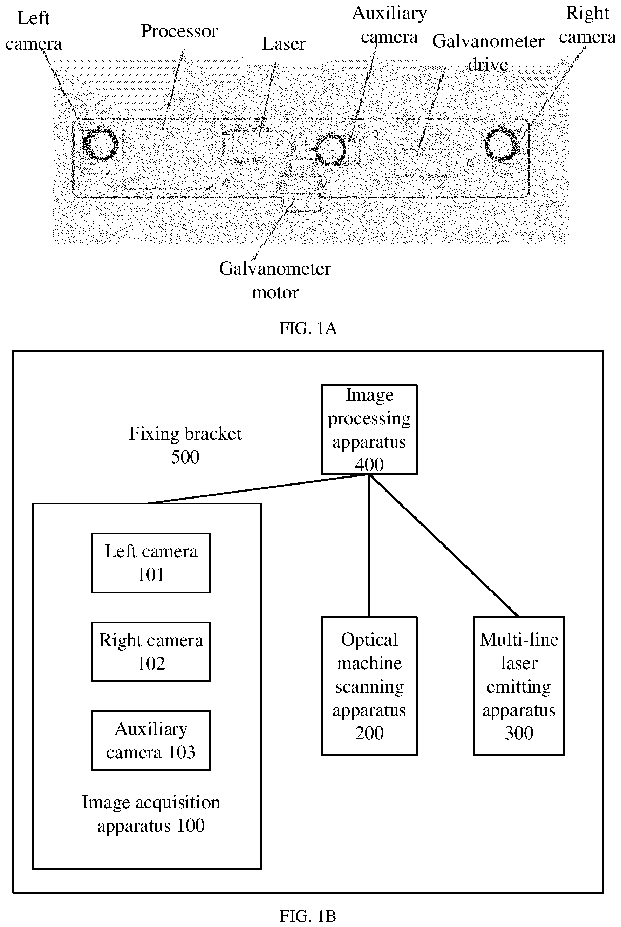

Referring to FIG. 1A, FIG. 1A is a schematic diagram illustrating an actual structure of a three-dimensional imaging device. The three-dimensional imaging device may include, but is not limited to, a left camera, a right camera, an auxiliary camera, a processor, a laser, a galvanometer motor, and a galvanometer drive. In another structure of the three-dimensional imaging device, the three-dimensional imaging device may include, but is not limited to, a left camera, a right camera, a processor, a laser, a galvanometer motor, and a galvanometer drive, that is, there is no auxiliary camera.

Referring to FIG. 1B, FIG. 1B is a structural block diagram of a three-dimensional imaging device, illustrating another form of the three-dimensional imaging device. The three-dimensional imaging device may include but is not limited to: an image acquisition apparatus 100, an optical machine scanning apparatus 200, a multi-line laser emitting apparatus 300, an image processing apparatus 400, and a fixing bracket 500.

In some examples, the image acquisition apparatus 100 may include a left camera 101 and a right camera 102, and the image acquisition apparatus 100 may also include the left camera 101, the right camera 102, and an auxiliary camera 103. The left camera 101 and the right camera 102 acquire depth information according to a triangulation method through binocular matching of multi-line laser, and the auxiliary camera 103 may or may not participate in reconstruction. The left camera 101 and the right camera 102 may be a monochrome camera, and an optical filter with a same bandwidth as a laser wavelength is added at a front end of the camera, so that only light in a range of the laser wavelength is allowed to pass through, that is, only light of the laser wavelength reflected by a surface of a tested object is received, and a reflected image of a laser line is obtained, thereby improving contrast and reducing ambient light interference. The left camera 101 and the right camera 102 may be respectively distributed on two sides of the mechanical galvanometer, and are symmetrically mounted left and right. The auxiliary camera 103 may be a monochrome camera or an RGB camera, and the installation position of the auxiliary camera 103 is as close as possible to the emergent optical axis of the mechanical galvanometer, so as to ensure a short baseline, so that the visual field basically coincides with the laser scanning visual field, and in this way, all laser lines can be completely shot by the auxiliary camera 103 each time. When the auxiliary camera 103 is an RGB camera, the laser may be turned off to capture a color image of a surface of a tested object, thereby implementing an output function of an RGBD image.

In some examples, the optical machine scanning apparatus 200 may include a mechanical galvanometer, that is, the mechanical galvanometer is used to implement a scanning function, and the mechanical galvanometer may include a galvanometer motor, a galvanometer drive, and a reflector. FIG. 1A merely shows the galvanometer motor and the galvanometer drive. The mechanical galvanometer may be a mechanical galvanometer with high repetition precision, and the reflector has a visible light reflecting film, which can reflect the laser line and change the emission angle of the laser line.

In some examples, the multi-line laser emitting apparatus 300 may include a laser, and the laser may be a multi-line laser, that is, a laser that simultaneously emits multiple laser lines. For example, the laser may adopt a multi-line laser module group, mainly consisting of a laser diode, a collimating lens, and a multi-line DOE (Diffractive Optical Element). The laser diode adopts a high-power red light laser diode, with wavelengths of 635 nm, 660 nm, or other wavelengths. The multi-line DOE may simultaneously emit 10 laser lines, or 11 laser lines, or 25 laser lines, etc., which is not limited.

In some examples, the image processing apparatus 400 may include a processor, such as a CPU or a GPU, and the image processing apparatus 400 is connected to the image acquisition apparatus 100, the optical engine scanning apparatus 200, and the multi-line laser emitting apparatus 300. The image processing apparatus 400 may start the multi-line laser emitting apparatus 300, the multi-line laser emitting apparatus 300 emits a plurality of line lasers (i.e., line-structured light), the plurality of line lasers irradiate the surface of the tested object after being reflected by the mechanical galvanometer, the image processing apparatus 400 controls the mechanical galvanometer to start scanning, and each time an angle is scanned, the image processing apparatus 400 may receive angle feedback information of the mechanical galvanometer, and trigger the image acquisition apparatus 100 according to the angle feedback information to acquire a multi-line laser image of the surface of the tested object.

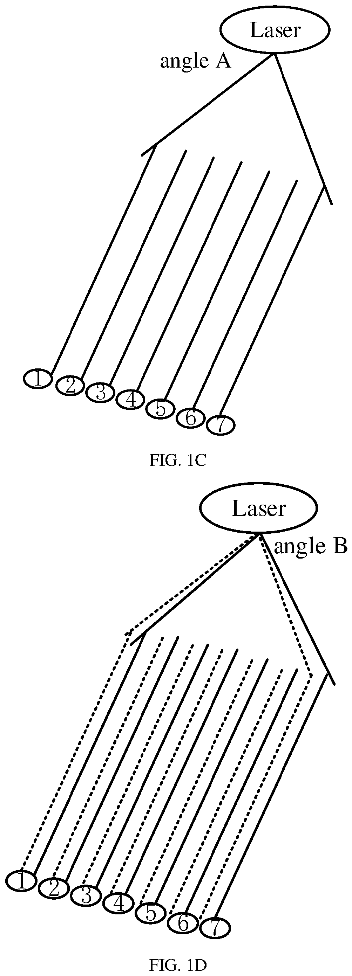

For convenience of description, in subsequent embodiments, the image processing apparatus 400 is a processor, the image acquisition apparatus 100 is a left camera, a right camera and an auxiliary camera, the optical engine scanning apparatus 200 is a mechanical galvanometer, and the multi-line laser emitting apparatus 300 is a laser. Referring to FIG. 1C, a laser may emit a plurality of line lasers (7 line lasers are taken as an example in FIG. 1C), and the line lasers are reflected by a mechanical galvanometer and then irradiate a surface of a tested object. An initial angle of the mechanical galvanometer is an angle A, and at the angle A, a left camera captures a line-structured light image A1 of a tested object, a right camera captures a line-structured light image A2 of the tested object, and an auxiliary camera captures a line-structured light image A3 of the tested object. Then, referring to FIG. 1D, the angle of the mechanical galvanometer is the angle B, the left camera captures the line-structured light image B1 of the tested object, the right camera captures the line-structured light image B2 of the tested object, and the auxiliary camera captures the line-structured light image B3 of the tested object. By analogy, until the final angle of the mechanical galvanometer, it indicates that the complete scanning of the surface of the tested object has been completed.

Based on the line-structured light image A1, line-structured light image A2, and line-structured light image A3, the processor may determine three-dimensional points (i.e., three-dimensional point cloud) at the angle A. Based on the line-structured light image B1, the line-structured light image B2, and the line-structured light image B3, the processor may determine three-dimensional points at the angle B, and by analogy, three-dimensional points at all angles may be obtained. On this basis, the three-dimensional points at all angles may be spliced to obtain complete three-dimensional points of the surface of the tested object, that is, a complete three-dimensional reconstructed image of the surface of the tested object is obtained.

When the auxiliary camera adopts an RGB camera, after the scanning is completed, the processor may further turn off the laser, control the auxiliary camera to acquire an RGB image, then fit and align the three-dimensional reconstructed image and the RGB image to output an RGBD image, and the processing for the RGBD image is not limited in this embodiment.

In some examples, the fixing bracket 500 plays a role of fixing and heat dissipation, and is made of metal aluminum or other materials. The camera and the mechanical galvanometer are integrally fixed, so as to ensure the relative positions of the camera and the mechanical galvanometer unchanged.

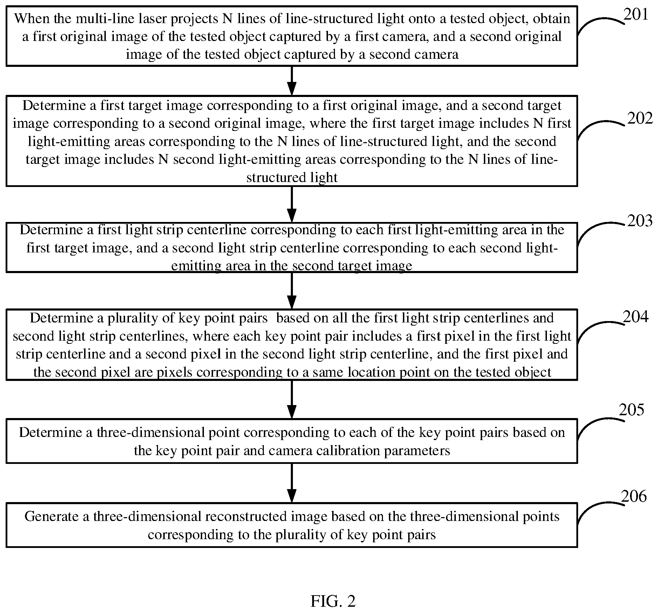

The image reconstruction method in the embodiments of the disclosure is described below with reference to specific embodiments. Referring to FIG.2, FIG. 2 is a schematic flowchart of an image reconstruction method according to an embodiment of the disclosure, and the method may include steps 201 -206.

Step 201: when the multi-line laser projects N lines of line-structured light (that is, laser lines) onto a tested object (that is, a tested target), a first original image of the tested object captured by a first camera is obtained, and a second original image of the tested object captured by a second camera is obtained, where N may be a positive integer greater than 1.

In some examples, the image reconstruction method may be applied to a three-dimensional imaging device, the three-dimensional imaging device may include a first camera, a second camera, and a multi-line laser, and the three-dimensional imaging device may further include a processor and a mechanical galvanometer. The first camera may be a left camera, and the second camera may be a right camera, or the first camera may be a right camera, and the second camera may be a left camera. The multi-line laser is the laser in the foregoing embodiment.

When the angle of the mechanical galvanometer is the angle A, the N lines of line-structured light are projected onto the tested object through the multi-line laser, the left camera captures the line-structured light image A1 of the tested object, and the right camera captures the line-structured light image A2 of the tested object. On this basis, assuming that the first camera is a left camera and the second camera is a right camera, the processor may obtain a first original image (for example, the line-structured light image A1) and a second original image (for example, the line-structured light image A2), and perform subsequent processing based on the first original image and the second original image.

When the angle of the mechanical galvanometer is the angle B, the N lines of line-structured light are projected onto the tested object through the multi-line laser, the left camera captures the line-structured light image B1 of the tested object, and the right camera captures the line-structured light image B2 of the tested object. On this basis, the processor acquires the first original image (the line-structured light image B1) and the second original image (the line-structured light image B2), and performs subsequent processing based on the first original image and the second original image. By analogy, at each angle of the mechanical galvanometer, the processor may obtain the first original image of the tested object captured by the first camera and the second original image of the tested object captured by the second camera.

In some examples, because the N lines of line-structured light are projected onto the tested object by using the multi-line laser, the first original image may include N first light-emitting areas corresponding to the N lines of line-structured light, the N first light-emitting areas are in one-to-one correspondence with the N lines of line-structured light, the second original image may include N second light-emitting areas corresponding to the N lines of line-structured light, and the N second light-emitting areas are in one-to-one correspondence with the N lines of line-structured light.

Step 202: a first target image corresponding to a first original image is determined, and a second target image corresponding to a second original image is determined, where the first target image includes the N first light-emitting areas corresponding to the N lines of line-structured light, and the second target image includes the N second light-emitting areas corresponding to the N lines of line-structured light.

In a possible implementation, the first original image may be directly determined as the first target image, and the second original image may be determined as the second target image. Alternatively, binocular correction is performed on the first original image and the second original image to obtain the first target image corresponding to the first original image and the second target image corresponding to the second original image. The binocular correction is used to make the same position point on the tested object have the same pixel height in the first target image and the second target image, and no restrictions are made to this binocular correction process.

Step 203: a first light strip centerline corresponding to each first light-emitting area in the first target image is determined, and a second light strip centerline corresponding to each second light-emitting area in the second target image is determined.

Step 204: a plurality of key point pairs are determined based on all the first light strip centerlines and all the second light strip centerlines, where each key point pair includes a first pixel in the first light strip centerline and a second pixel in the second light strip centerline, and the first pixel and the second pixel are pixels corresponding to a same location point on the tested object.

In a possible implementation, for each line-structured light, a target first light strip centerline and a target second light strip centerline corresponding to the line-structured light may be determined from all first light strip centerlines and all second light strip centerlines; and for each first pixel in the target first light strip centerline, the first pixel is projected to the second target image to obtain a projected pixel corresponding to the first pixel, and a second pixel corresponding to the projected pixel is selected from the target second light strip centerline. A key point pair is generated based on the first pixel and the second pixel, that is, the key point pair includes the first pixel and the second pixel.

In some examples, the selecting a second pixel corresponding to the projected pixel from the target second light strip centerline may include, but is not limited to: determining, from the target second light strip centerline, a pixel having a same pixel height as the projected pixel; if there is one determined pixel, selecting the pixel as the second pixel; and if there are at least two determined pixels, determining a re-projection error between each of the at least two pixels and the projected pixel, and selecting a pixel corresponding to a minimum re-projection error as the second pixel.

In some examples, projecting the first pixel to the second target image to obtain a projected pixel corresponding to the first pixel may include, but is not limited to, obtaining a first calibration equation and a second calibration equation corresponding to the line-structured light, where the first calibration equation represents a functional relationship between pixels in the first target image and three-dimensional reconstruction points, and the second calibration equation represents a functional relationship between pixels in the second target image and three-dimensional reconstruction points. On this basis, the first pixel is converted into a target three-dimensional reconstruction point based on the first calibration equation; and the target three-dimensional reconstruction point is converted into the projected pixel based on a second calibration equation.

Step 205: a three-dimensional point corresponding to each of the key point pairs is determined based on the key point pair and camera calibration parameters.

In a possible implementation, the camera calibration parameters may include camera internal parameters of the first camera, camera internal parameters of the second camera, and camera external parameters between the first camera and the second camera. Distortion correction may be performed on the first pixel by using the camera internal parameters of the first camera, and the distortion-corrected pixel is converted into first homogeneous coordinates; and distortion correction is performed on the second pixel by using the camera internal parameters of the second camera, and the distortion-corrected pixel is converted into second homogeneous coordinates. Then, based on the first homogeneous coordinates, the second homogeneous coordinates, the camera internal parameters of the first camera, the camera internal parameters of the second camera, and the camera external parameters, the three-dimensional point corresponding to the key point pair is determined in a triangulation manner, which is not limited.

Step 206: a three-dimensional reconstructed image of the tested object is generated based on the three-dimensional points corresponding to the plurality of key point pairs.

For example, when the angle of the mechanical galvanometer is the angle A, the three-dimensional points corresponding to the plurality of key point pairs may be determined based on the first original image and the second original image corresponding to the angle A; when the angle of the mechanical galvanometer is the angle B, the three-dimensional points corresponding to the plurality of key point pairs may be determined based on the first original image and the second original image corresponding to the angle B; and by analogy, based on the three-dimensional points corresponding to all angles, a three-dimensional reconstructed image may be generated, i.e., a complete three-dimensional reconstructed image of the surface of the tested object is obtained.

In a possible implementation, the three-dimensional imaging device may further include a third camera, that is, an auxiliary camera. On this basis, when the multi-line laser projects the N lines of line-structured light onto the tested object, a third original image (for example, a line-structured light image A3, a line-structured light image B3, etc.) of the tested object captured by the third camera may also be acquired, and a third target image corresponding to the third original image is determined, where the third target image includes N third light-emitting areas corresponding to the N lines of line-structured light. A third light strip centerline corresponding to each third light-emitting area in the third target image is determined. For each line-structured light, a target third light strip centerline corresponding to the line-structured light is determined from all the third light strip centerlines. For each first pixel in the centerline of the target first light strip, projecting the first pixel to the second target image to obtain a projected pixel corresponding to the first pixel may further include: determining, from the target third light strip centerline, a third pixel having a same pixel height as the first pixel; determining a target three-dimensional reconstruction point based on the first pixel, the third pixel, and camera calibration parameters; and converting the target three-dimensional reconstruction point into the projected pixel based on a third calibration equation, where the third calibration equation represents a functional relationship between pixels in the second target image and three-dimensional reconstruction points.

In this embodiment of the disclosure, the multi-line laser projects N lines of line-structured light onto the tested object each time, where N is a positive integer greater than 1, for example, 7, 11, or 15, so that the line-structured light image captured by the camera each time includes N light strip centerlines, and the line-structured light image is equivalent to line-structured light images of N positions of the tested object, thereby reducing collection time of the line-structured light image and reducing time of three-dimensional reconstruction. When the multi-line laser scans the surface of the tested object, the whole contour data of the tested object can be quickly obtained, the three-dimensional image information of the tested object is output, and the detection precision and the detection speed are improved. The first camera and the second camera are used for simultaneously capturing the line-structured light images, and based on the line-structured light images captured by the two cameras, the three-dimensional information of the tested object can be obtained by using the triangulation method, namely, the depth information of the tested object can be obtained, so that the depth information on the multi-line laser is obtained by using the captured image at a single time, the scanning efficiency at a single time can be improved by N times, and the full-size scanning of the whole contour of the tested object can be quickly realized.

The foregoing technical solutions in the embodiments of the disclosure are described below with reference to specific application scenarios.

Application scenario 1: the three-dimensional imaging device may include a first camera, a second camera, a processor, a multi-line laser, and a mechanical galvanometer, where the first camera is a left camera, and the second camera is a right camera, or the first camera is a right camera, and the second camera is a left camera. In the application scenario 1, camera calibration parameters, a first calibration equation, and a second calibration equation corresponding to the three-dimensional imaging device may be obtained in advance, and the camera calibration parameters, the first calibration equation, and the second calibration equation are stored for the three-dimensional imaging device.

For example, the camera calibration parameters may include camera internal parameters of the first camera, camera internal parameters of the second camera, and camera external parameters between the first camera and the second camera. The camera internal parameters of the first camera are parameters related to characteristics of the first camera, such as focal length, pixel size, and distortion coefficient. The camera internal parameters of the second camera are parameters related to characteristics of the second camera, such as focal length, pixel size, and distortion coefficient. The camera external parameters between the first camera and the second camera are parameters in a world coordinate system, such as a position and a rotation direction of the first camera, a position and a rotation direction of the second camera, and a positional relationship between the first camera and the second camera, for example, a rotation matrix and a translation matrix.

The camera internal parameters of the first camera are inherent parameters of the first camera, and the camera internal parameter of the first camera have been set when the first camera leaves the factory. The camera internal parameters of the second camera are inherent parameters of the second camera, and the camera internal parameters of the second camera have been set when the second camera leaves the factory.

Regarding the camera external parameters between the first camera and the second camera, such as a rotation matrix and a translation matrix, a plurality of calibration points may be deployed in a target scene. A first calibration image of the target scene is captured by using the first camera, where the first calibration image includes the plurality of calibration points. A second calibration image of the target scene is captured by using the second camera, where the second calibration image includes the plurality of calibration points. Based on the pixel coordinates of the plurality of calibration points in the first calibration image and the pixel coordinates of the plurality of calibration points in the second calibration image, the camera external parameters between the first camera and the second camera can be determined, and the determination process of the camera external parameters is not limited.

In some examples, the first calibration equation represents a functional relationship between pixels in an image (denoted as image s1) captured by the first camera and three-dimensional reconstruction points, and the second calibration equation represents a functional relationship between pixels in an image (denoted as image s2) captured by the second camera and three-dimensional reconstruction points. Assuming that the multi-line laser projects N lines of line-structured light onto the tested object, and the angles of the mechanical galvanometer are M angles in total, N * M first calibration equations and N * M second calibration equations need to be obtained in total, and both the first calibration equations and the second calibration equations may be light plane equations. A manner of obtaining the first calibration equations and the second calibration equations may include steps S11 to S15.

Step S11: for each angle of the mechanical galvanometer, when the multi-line laser projects N lines of line-structured light onto a white background plate, an image s1 captured by the first camera is obtained, and an image s2 captured by the second camera is obtained. The image s1 includes N first light-emitting areas corresponding to the N lines of line-structured light, the N first light-emitting areas are in one-to-one correspondence with the N lines of line-structured light, the image s2 includes N second light-emitting areas corresponding to the N lines of line-structured light, and the N second light-emitting areas are in one-to-one correspondence with the N lines of line-structured light.

Step S12: a first light strip centerline corresponding to each first light-emitting area in the image s1 is determined, and a second light strip centerline corresponding to each second light-emitting area in the image s2 is determined, that is, N first light strip centerlines corresponding to the N lines of line-structured light are obtained, and N second light strip centerlines corresponding to the N lines of line-structured light are obtained.

Step S13: a plurality of key point pairs are determined based on all first light strip centerlines and all second light strip centerlines, where each key point pair includes a first center point in the first light strip centerline and a second center point in the second light strip centerline, and the first center point and the second center point are pixels corresponding to a same position point on a white background plate.

For example, assuming that the N lines of line-structured light are the line-structured light 1 and the line-structured light 2, the image s1 includes a first light-emitting area 1 corresponding to the line-structured light 1 and a first light-emitting area 2 corresponding to the line-structured light 2, and the image s2 includes a second light-emitting area 1 corresponding to the line-structured light 1 and a second light-emitting area 2 corresponding to the line-structured light 2. The first light-emitting area 1 corresponds to the first light strip centerline 1, the first light-emitting area 2 corresponds to the first light strip centerline 2, the second light-emitting area 1 corresponds to the second light strip centerline 1, and the second light-emitting area 2 corresponds to the second light strip centerline 2.

In some examples, since the tested object is a white background plate, when 2 lines of line-structured light are projected onto the white background plate, the light-emitting areas are relatively clear, and no stray point is generated, therefore, when the first light strip centerline 1 is determined based on the first light-emitting area 1, each row of the first light strip centerline 1 has only 1 center point, and similarly, each row of the second light strip centerline 1 has only 1 center point. On this basis, the center point of the first row of the first light strip centerline 1 and the center point of the first row of the second light strip centerline 1 form a key point pair 11, the center point of the second row of the first light strip centerline 1 and the center point of the second row of the second light strip centerline 1 form a key point pair 12, and so on. Similarly, a center point of the first row of the first light strip centerline 2 and a center point of the first row of the second light strip centerline 2 may form a key point pair 21, a center point of the second row of the first light strip centerline 2 and a center point of the second row of the second light strip centerline 2 may form a key point pair 22, and so on.

Step S14: for each key point pair, a three-dimensional point corresponding to the key point pair is determined based on the key point pair and camera calibration parameters. For example, a three-dimensional point corresponding to the key point pair may be determined in a triangulation manner, and for this triangulation manner, reference may be made to subsequent embodiments, and details are not described herein.

Step S15: first calibration equations and second calibration equations corresponding to the angle of the mechanical galvanometer and the line-structured light are determined based on the key point pairs and the three-dimensional points corresponding to the key point pairs.

For example, for the angle A of the mechanical galvanometer, the first calibration equation and the second calibration equation corresponding to the angle A and the line-structured light 1 are determined based on a plurality of key point pairs (such as the key point pair 11 and the key point pair 12) between the first light strip centerline 1 and the second light strip centerline 1 and three-dimensional points corresponding to the key point pairs.

For example, based on a large number of center points of the first light strip centerline 1 and a three-dimensional point corresponding to each of the center points, a first calibration equation may be determined, and the first calibration equation is used to represent a functional relationship between pixels (that is, the center points of the first light strip centerline 1) in the image s1 and three-dimensional reconstruction points (that is, the three-dimensional points corresponding to the center points). For example, a plane model or a quadratic model is used for fitting to obtain the first calibration equation.

Based on a large number of center points of the second light strip centerline 1 and the three-dimensional point corresponding to each of the center points, a second calibration equation may be determined, and the second calibration equation is used to represent a functional relationship between pixels (that is, the center points of the second light strip centerline 1) in the image s2 and three-dimensional reconstruction points (that is, the three-dimensional points corresponding to the center points).

Similarly, a first calibration equation and a second calibration equation corresponding to the angle A and the line-structured light 2 may be obtained, a first calibration equation and a second calibration equation corresponding to the angle B and the line-structured light 1 may be obtained, and so on.

In conclusion, for each angle of the mechanical galvanometer, a first calibration equation and a second calibration equation corresponding to each line-structured light may be obtained, that is, N * M first calibration equations and N * M second calibration equations may be obtained.

In some examples, for the N lines of line-structured light projected by the multi-line laser, each line of line-structured light may be numbered according to an actual sequence, for example, according to a sequence from left to right (or from right to left), the N lines of line-structured light (i.e., laser lines) are sequentially labeled as 1, 2, 3,···, N, so as to facilitate matching and indexing of each line of line-structured light.

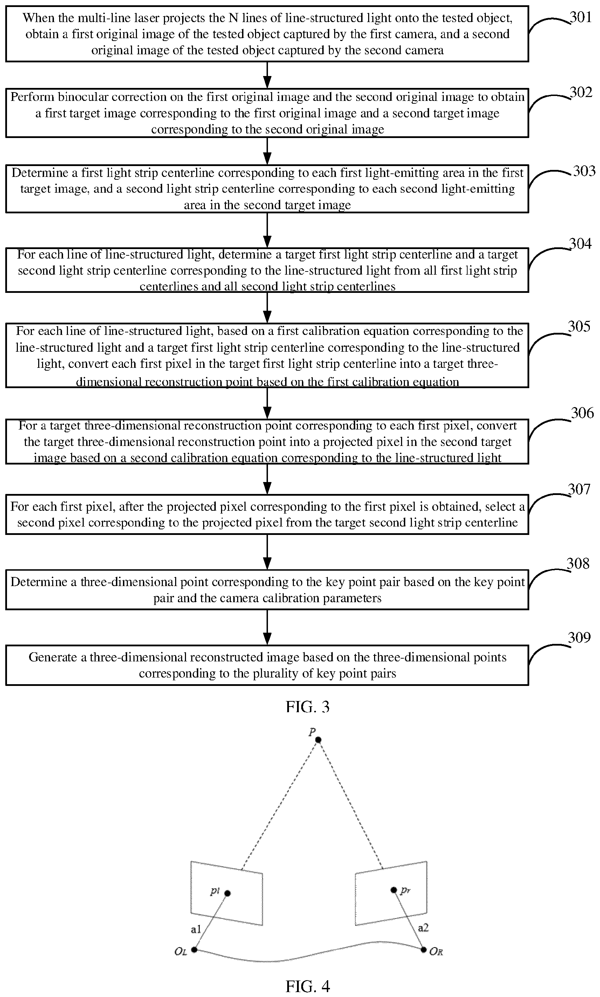

In the application scenario 1, referring to FIG. 3, the image reconstruction method of this embodiment may include steps 301 -309.

Step 301: when the multi-line laser projects the N lines of line-structured light onto the tested object, a first original image of the tested object captured by the first camera is obtained, and a second original image of the tested object captured by the second camera is obtained, where the time when the first original image is captured may be the same as the time when the second original image is captured.

For example, the first original image includes N first light-emitting areas corresponding to the N lines of line-structured light, for example, a first light-emitting area 1 corresponding to line-structured light 1, a first light-emitting area 2 corresponding to line-structured light 2, and so on. The second original image includes N second light-emitting areas corresponding to the N lines of line-structured light, for example, a second light-emitting area 1 corresponding to line-structured light 1, a second light-emitting area 2 corresponding to line-structured light 2, and so on.

Step 302: binocular correction is performed on the first original image and the second original image to obtain a first target image corresponding to the first original image and a second target image corresponding to the second original image.

In some examples, binocular correction is used to enable the same position point on the tested object to have the same pixel height in the first target image and the second target image. That is, for the same position point on the tested object, the pixel heights of the position point in the first original image and the second original image are corrected to be same through binocular correction. In this way, when matching is performed, the matching is performed directly in one row, which is more convenient for the matching. For example, matching the corresponding points in the two-dimensional space is very time-consuming, in order to reduce the search range of the matching, epipolar constraint can be used to reduce the matching of the corresponding points from two-dimensional search to one-dimensional search, and the function of binocular correction is to perform line correspondence on the first original image and the second original image to obtain the first target image and the second target image, so that epipolar lines of the first target image and the second target image are exactly on the same horizontal line, and thus, any point on the first target image and the corresponding point on the second target image must have the same line number, and only the one-dimensional search needs to be performed on the line.

For example, the first target image includes N first light-emitting areas corresponding to N lines of line-structured light, for example, a first light-emitting area 1 corresponding to line-structured light 1, a first light-emitting area 2 corresponding to line-structured light 2, and so on. The second target image includes N second light-emitting areas corresponding to N lines of line-structured light, for example, a second light-emitting area 1 corresponding to line-structured light 1, a second light-emitting area 2 corresponding to line-structured light 2, and so on.

Step 303: a first light strip centerline corresponding to each first light-emitting area in the first target image is determined, and a second light strip centerline corresponding to each second light-emitting area in the second target image is determined.

In some examples, each row of the first light-emitting area may include a plurality of pixels, a center point of the row may be selected from the plurality of pixels, and center points of all rows of the first light-emitting area form a first light strip centerline, and therefore, a first light strip centerline 1 corresponding to the first light-emitting area 1, a first light strip centerline 2 corresponding to the first light-emitting area 2, ···, and so on are obtained. Similarly, the second light strip centerline 1 corresponding to the second light-emitting area 1, the second light strip centerline 2 corresponding to the second light-emitting area 2,···, and so on are obtained.

In some examples, the light strip centerline corresponding to the light-emitting area may be determined by using a light strip centerline extraction algorithm, for example, a center point of each row of the light-emitting area may be extracted by using Gaussian fitting, center of gravity (COG), or STEGER, to obtain the light strip centerline, which is not limited in this embodiment.

For example, assuming that heights of the first target image and the second target image are H, each first light strip centerline includes center points of H rows, and each second light strip centerline includes center points of H rows.

Step 304: for each line of line-structured light, a target first light strip centerline and a target second light strip centerline corresponding to the line-structured light are determined from all first light strip centerlines and all second light strip centerlines.

For example, the first light strip centerline 1 and the second light strip centerline 1 corresponding to the line-structured light 1 are determined, the first light strip centerline 2 and the second light strip centerline 2 corresponding to the line-structured light 2 are determined, and so on.

Step 305: for each line of line-structured light, based on a first calibration equation corresponding to the line-structured light and a target first light strip centerline corresponding to the line-structured light, each first pixel in the target first light strip centerline is converted into a target three-dimensional reconstruction point based on the first calibration equation.

In some examples, an angle of the mechanical galvanometer may be determined, that is, the first original image and the second original image are obtained at the angle, and for each line of line-structured light, a first calibration equation corresponding to the angle and the line-structured light may be selected from N * M first calibration equations. Because the first calibration equation represents a functional relationship between pixels in the first target image and three-dimensional reconstruction points, each first pixel in the target first light strip centerline may be converted into a target three-dimensional reconstruction point based on the first calibration equation.

For example, for the first light strip centerline 1 corresponding to the line-structured light 1, each first pixel in the first light strip centerline 1 is converted into a target three-dimensional reconstruction point based on the first calibration equation corresponding to the line-structured light 1. For the first light strip centerline 2 corresponding to the line-structured light 2, each first pixel in the first light strip centerline 2 is converted into a target three-dimensional reconstruction point based on the first calibration equation corresponding to the line-structured light 2, and so on.

Step 306: for a target three-dimensional reconstruction point corresponding to each first pixel, the target three-dimensional reconstruction point may be converted into a projected pixel in the second target image based on a second calibration equation corresponding to the line-structured light, where the projected pixel is a projected pixel corresponding to the first pixel.

For example, for each line of line-structured light, a second calibration equation corresponding to the line-structured light is selected from the N * M second calibration equations. Since the second calibration equation represents a functional relationship between pixels in the second target image and three-dimensional reconstruction points, after the first pixel in the target first light strip centerline is converted into the target three-dimensional reconstruction point, the target three-dimensional reconstruction point may be converted into the projected pixel based on the second calibration equation.

For example, when the target three-dimensional reconstruction point is converted into the projected pixel based on the second calibration equation corresponding to the line-structured light 1, the projected pixel corresponding to each first pixel in the first light strip centerline 1 is obtained. When the target three-dimensional reconstruction point is converted into the projected pixel based on the second calibration equation corresponding to the line-structured light 2, the projected pixel corresponding to each first pixel in the first light strip centerline 2 is obtained, and so on.

In conclusion, for each first pixel in the target first light strip centerline, the first pixel may be projected to the second target image to obtain a projected pixel corresponding to the first pixel.

Step 307: for each first pixel, after the projected pixel corresponding to the first pixel is obtained, a second pixel corresponding to the projected pixel is selected from the target second light strip centerline.

For example, for each line of line-structured light, taking the line-structured light 1 as an example, a target second light strip centerline corresponding to the line-structured light 1, that is, the second light strip centerline 1, may be determined, and for each first pixel in the first light strip centerline 1 corresponding to the line-structured light 1, after a projected pixel corresponding to the first pixel is obtained, a second pixel corresponding to the projected pixel may be selected from the second light strip centerline 1.

Obviously, the first pixel and the second pixel may form a key point pair, that is, the key point pair includes a first pixel in the first light strip centerline 1 and a second pixel in the second light strip centerline 1, the first pixel and the second pixel are pixels corresponding to a same location point on the tested object, the first pixel is a pixel in the first target image, and the second pixel is a pixel in the second target image.

In a possible implementation, the selecting, from the target second light strip centerline, a second pixel corresponding to the projected pixel may include: determining, from the target second light strip centerline, a pixel having a same pixel height as the projected pixel; if there is one determined pixel, selecting the pixel as the second pixel; and if there are at least two determined pixels, determining a re-projection error between each of the at least two pixels and the projected pixel, and selecting a pixel corresponding to a minimum re-projection error as the second pixel.

For example, a row of the second light strip centerline may include one pixel, and in this case, if there is one pixel having a same pixel height as the projected pixel, the pixel is selected as the second pixel. A row of the second light strip centerline may also include at least two pixels, for example, when there are stray points in the light-emitting area, there may be at least two pixels in a row, and in this case, if there are at least two pixels having the same pixel height as the projected pixel, a re-projection error between the projected pixel and each of the at least two pixels is determined, where the manner of determining the re-projection error is not limited, and after the re-projection error between the projected pixel and each of the at least two pixels is obtained, a pixel corresponding to the minimum re-projection error may be selected as the second pixel.

Step 308: a three-dimensional point corresponding to the key point pair is determined based on the key point pair and the camera calibration parameters.

In some examples, for each key point pair, the key point pair includes a first pixel in the first target image and a second pixel in the second target image, and the first pixel and the second pixel are pixels corresponding to a same position point on the tested object.

Step 3081: distortion correction is performed on the first pixel by using the camera internal parameters of the first camera, and the distortion-corrected pixel is converted into first homogeneous coordinates; and distortion correction is performed on the second pixel by using the camera internal parameters of the second camera, and the distortion-corrected pixel is converted into second homogeneous coordinates.

For example, due to lens manufacturing accuracy and assembly process deviation and other factors, an image captured by the first camera may be distorted, that is, may have a distortion, such as radial distortion and tangential distortion. To resolve a distortion problem, camera internal parameters of the first camera include distortion parameters, for example, radial distortion parameters k1, k2, k3, tangential distortion parameters p1, p2, and the like. Based on this, in this embodiment, distortion correction may be performed on the first pixel by using the camera internal parameters of the first camera, to obtain the pixel coordinates after the distortion removal processing. After obtaining the pixel coordinates after the distortion removal processing, the pixel coordinates after the distortion removal processing may be converted into first homogeneous coordinates. Similarly, distortion correction may be performed on the second pixel coordinates by using the camera internal parameters of the second camera, and the distortion-corrected pixel coordinates are converted into second homogeneous coordinates. In summary, the homogeneous coordinates of the key point pair may include first homogeneous coordinates of the first key point and second homogeneous coordinates of the second key point.

Step 3082: based on the first homogeneous coordinates, the second homogeneous coordinates, the camera internal parameters of the first camera, the camera internal parameters of the second camera, and the camera external parameters (such as a position relationship) between the first camera and the second camera, the three-dimensional point corresponding to the key point pair is determined in a triangulation manner.

For example, referring to FIG. 4, which is a schematic diagram illustrating principles of a triangulation manner, O_{L} is the position of the first camera, O_{R} is the position of the second camera, and based on the camera external parameters between the first camera and the second camera, the positional relationship between O_{L} and O_{R} can be obtained. For a three-dimensional point P in the three-dimensional space, the imaging position of the three-dimensional point P on the image plane of the first camera is pₗ, and the imaging position of the three-dimensional point P on the image plane of the second camera is pᵣ . pₗ is used as a first pixel, pᵣ is used as a second pixel, the first pixel and the second pixel form a key point pair, and the three-dimensional point P is a three-dimensional point corresponding to the key point pair. O_{L} , O_{R} , pₗ and pᵣ are transformed into a same coordinate system. For O_{L} , O_{R} , pₗ and pᵣ in the same coordinate system, there is a straight line a1 between O_{L} and pₗ, there is a straight line a2 between O_{R} and pr , and if there is an intersection point between straight line a1 and straight line a2, the intersection point between straight line a1 and straight line a2 is a three-dimensional point P. If there is no intersection point between the straight line a1 and the straight line a2, the three-dimensional point P is a point closest to the straight line a1 and the straight line a2. Based on the foregoing application scenario, three-dimensional space coordinates of the three-dimensional point P may be obtained in a triangulation manner, to obtain the three-dimensional point corresponding to the key point pair. Certainly, the foregoing implementation is merely an example of a triangulation manner, and an implementation of this triangulation manner is not limited.

In conclusion, for each key point pair, the three-dimensional point corresponding to the key point pair may be obtained, the first target image includes N first light strip centerlines, and each first light strip centerline includes H first pixels, so that N * H key point pairs may be obtained, and the N * H key point pairs correspond to N * H three-dimensional points.

Step 309: a three-dimensional reconstructed image is generated based on the three-dimensional points corresponding to the plurality of key point pairs.

For example, for each angle of the mechanical galvanometer, step 301 to step 308 may be used to determine N * H three-dimensional points at the angle, and in the scanning process of the mechanical galvanometer, a group of original images may be obtained at each angle to perform the foregoing operation. On this basis, assuming the mechanical galvanometer having M angles in total, a three-dimensional reconstructed image may be generated based on the M * N * H three-dimensional points, where the three-dimensional reconstructed image is point cloud data, and the three-dimensional reconstructed image is output. Alternatively, the three-dimensional reconstructed image may be projected onto a camera to obtain a depth image, and the depth image is output.

Application scenario 2: the three-dimensional imaging device may include a first camera, a second camera, a third camera, a processor, a multi-line laser, and a mechanical galvanometer, where the first camera is a left camera, the second camera is a right camera, and the third camera is an auxiliary camera, and alternatively, the first camera is a right camera, the second camera is a left camera, and the third camera is an auxiliary camera. Camera calibration parameters and a third calibration equation corresponding to the three-dimensional imaging device may be obtained in advance, and the camera calibration parameters and the third calibration equation are stored for the three-dimensional imaging device.

In some examples, the camera calibration parameters include camera internal parameters of the first camera, camera internal parameters of the second camera, camera internal parameters of the third camera, camera external parameters (for example, a positional relationship, such as a rotation matrix and a translation matrix) between the first camera and the second camera, camera external parameters (for example, a positional relationship) between the first camera and the third camera, and camera external parameters (for example, a positional relationship) between the second camera and the third camera.

For a manner of obtaining the camera calibration parameters, refer to the application scenario 1, and details are not described herein again.

In some examples, the third calibration equation represents a functional relationship between pixels in the image (denoted as image s2) captured by the second camera and three-dimensional reconstruction points. Assuming that the multi-line laser projects N lines of line-structured light onto the tested object, and the angles of the mechanical galvanometer are M angles in total, N * M third calibration equations need to be obtained in total, and all the third calibration equations may be light plane equations. For a manner of obtaining the third calibration equation, refer to a manner of obtaining the second calibration equation in the application scenario 1, and details are not described herein again.

In some examples, for the N lines of line-structured light projected by the multi-line laser, each line of line-structured light may be numbered according to an actual sequence, for example, according to a sequence from left to right (or from right to left), the N lines of line-structured light (i.e., laser lines) are sequentially labeled as 1, 2, 3,···, N, so as to facilitate matching and indexing of each line of line-structured light.

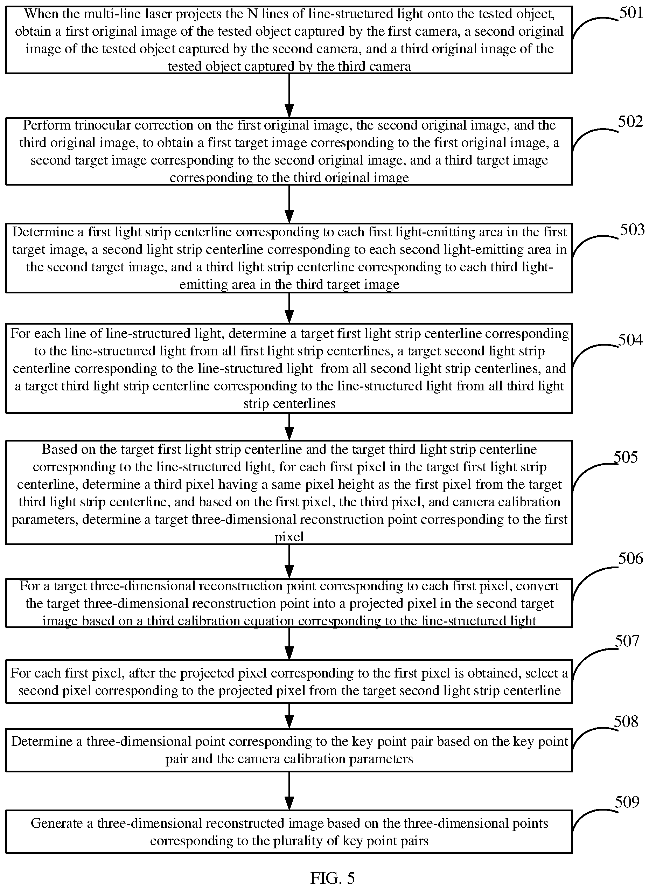

In the application scenario 2, referring to FIG. 5, the image reconstruction method of this embodiment may include steps 501 -509.

Step 501: when the multi-line laser projects the N lines of line-structured light onto the tested object, a first original image of the tested object captured by the first camera is obtained, a second original image of the tested object captured by the second camera is obtained, and a third original image of the tested object captured by the third camera is obtained. The capture time of the first original image, the capture time of the second original image, and the capture time of the third original image may be the same.

For example, the first original image may include N first light-emitting areas corresponding to N lines of line-structured light, the second original image may include N second light-emitting areas corresponding to N lines of line-structured light, and the third original image may include N third light-emitting areas corresponding to N lines of line-structured light.

Step 502: trinocular correction is performed on the first original image, the second original image, and the third original image, to obtain a first target image corresponding to the first original image, a second target image corresponding to the second original image, and a third target image corresponding to the third original image. The trinocular correction is used to make the same position point on the tested object have the same pixel height in the first target image, the second target image and the third target image, that is, for the same position point on the tested object, the pixel heights of the position point in the first original image, the second original image and the third original image can be corrected to be the same through the trinocular correction.

For example, the first target image may include N first light-emitting areas corresponding to N lines of line-structured light, the second target image may include N second light-emitting areas corresponding to the N lines of line-structured light, and the third target image may include N third light-emitting areas corresponding to the N lines of line-structured light.

Step 503: a first light strip centerline corresponding to each first light-emitting area in the first target image is determined, a second light strip centerline corresponding to each second light-emitting area in the second target image is determined, and a third light strip centerline corresponding to each third light-emitting area in the third target image is determined.

In some examples, the light strip centerline corresponding to the light-emitting area may be determined by using a light strip centerline extraction algorithm, for example, a center point of each row of the light-emitting area may be extracted by using Gaussian fitting, COG, or STEGER, and so on, to obtain the light strip centerline, which is not limited in this embodiment.

Step 504: for each line of line-structured light, a target first light strip centerline corresponding to the line-structured light is determined from all first light strip centerlines, a target second light strip centerline corresponding to the line-structured light is determined from all second light strip centerlines, and a target third light strip centerline corresponding to the line-structured light is determined from all third light strip centerlines.

Step 505: based on the target first light strip centerline and the target third light strip centerline corresponding to the line-structured light, for each first pixel in the target first light strip centerline, a third pixel having a same pixel height as the first pixel is determined from the target third light strip centerline, and based on the first pixel, the third pixel, and camera calibration parameters, a target three-dimensional reconstruction point corresponding to the first pixel is determined.

For example, for each first pixel in the target first light strip centerline, a pixel having a same pixel height as the first pixel is determined from the target third light strip centerline. If one pixel is determined, the pixel is selected as the third pixel. If there are at least two determined pixels, a re-projection error between each of the at least two pixels and the first pixel is determined, where a manner of determining the re-projection error is not limited, and a pixel corresponding to a minimum re-projection error is selected as the third pixel.

For example, the first pixel and the third pixel may form a key point pair, that is, the key point pair includes the first pixel in the first target image and the third pixel in the third target image, and the first pixel and the third pixel are pixels corresponding to a same location point on the tested object. On this basis, a three-dimensional point corresponding to the key point pair may be determined in a triangulation manner, and the three-dimensional point is the target three-dimensional reconstruction point corresponding to the first pixel. For example, distortion correction is performed on the first pixel by using the camera internal parameters of the first camera, and the pixel after distortion correction is converted into first homogeneous coordinates; and distortion correction is performed on the third pixel by using the camera internal parameters of the third camera, and the pixel after distortion correction is converted into third homogeneous coordinates. Based on the first homogeneous coordinates, the third homogeneous coordinates, the camera internal parameters of the first camera, the camera internal parameters of the third camera, and the camera external parameters (such as a position relationship) between the first camera and the third camera, the three-dimensional point corresponding to the key point pair is determined in a triangulation manner, and details are not described herein again.

In conclusion, for each first pixel in the target first light strip centerline, the target three-dimensional reconstruction point corresponding to the first pixel is determined, that is, the correspondence between the first pixels and the target three-dimensional reconstruction points is obtained.

Step 506: for a target three-dimensional reconstruction point corresponding to each first pixel, the target three-dimensional reconstruction point may be converted into a projected pixel in the second target image based on a third calibration equation corresponding to the line-structured light, where the projected pixel is a projected pixel corresponding to the first pixel.

For example, for each line of line-structured light, a third calibration equation corresponding to the line-structured light is selected from the N * M third calibration equations. Since the third calibration equation represents a functional relationship between the pixels in the second target image and the three-dimensional reconstruction points, after the first pixel in the target first light strip centerline is converted into the target three-dimensional reconstruction point, the target three-dimensional reconstruction point may be converted into the projected pixel based on the third calibration equation.

In conclusion, for each first pixel in the target first light strip centerline, the first pixel may be projected to the second target image to obtain a projected pixel corresponding to the first pixel.

Step 507: for each first pixel, after the projected pixel corresponding to the first pixel is obtained, a second pixel corresponding to the projected pixel is selected from the target second light strip centerline.

For example, a pixel having the same pixel height as the projected pixel may be determined from the target second light strip centerline; if one pixel is determined, the pixel is selected as the second pixel; and if at least two pixels are determined, a re-projection error between each of the at least two pixels and the projected pixel is determined, and a pixel corresponding to a minimum re-projection error is selected as the second pixel.

Obviously, the first pixel and the second pixel may form a key point pair, the first pixel and the second pixel are pixels corresponding to a same location point on the tested object, the first pixel is a pixel in the first target image, and the second pixel is a pixel in the second target image.

Step 508: a three-dimensional point corresponding to the key point pair is determined based on the key point pair and the camera calibration parameters. For example, distortion correction is performed on the first pixel by using the camera internal parameters of the first camera, and the pixel after distortion correction is converted into first homogeneous coordinates; and distortion correction is performed on the second pixel by using the camera internal parameters of the second camera, and the pixel after distortion correction is converted into second homogeneous coordinates. Based on the first homogeneous coordinates, the second homogeneous coordinates, the camera internal parameters of the first camera, the camera internal parameters of the second camera, and the camera external parameters between the first camera and the second camera, the three-dimensional point corresponding to the key point pair is determined in a triangulation manner.

In summary, for each key point pair, a three-dimensional point corresponding to the key point pair may be obtained.

Step 509: a three-dimensional reconstructed image is determined based on the three-dimensional points corresponding to the plurality of key point pairs.

In the embodiment of the disclosure, the multi-line laser projects N lines of line-structured light onto the tested object each time, so that the line-structured light image captured by the camera each time includes N light strip centerlines, and the line-structured light image is equivalent to line-structured light images of the N positions of the tested object. In this way, the acquisition frequency of the line-structured light image can be reduced, and the three-dimensional reconstruction time is shortened. When the multi-line laser scans the surface of the tested object, the whole contour data of the tested object can be quickly obtained, the three-dimensional image information of the tested object is output, and the detection precision and the detection speed are improved. The first camera and the second camera are used for simultaneously collecting the line-structured light images, and based on the line-structured light images captured by the two cameras, the three-dimensional information of the tested object can be obtained by using the triangulation method, namely, the depth information of the tested object can be obtained, so that the depth information on the multi-line laser is obtained by using the image captured at a single time, the single-time scanning efficiency can be improved by N times, and the full-size scanning of the whole contour of the tested object can be quickly realized. A multi-line laser triangulation method is adopted to acquire depth information on a plurality of laser lines at a time, and a mechanical galvanometer is adopted to realize small-angle scanning of laser line spacing, so that high-precision scanning of the whole contour of the surface of a tested object can be completed. Since the laser contrast is high, the collimation is good, the depth of field is relatively large, the adaptability to the material is better during three-dimensional detection application, and the detection precision is higher, the method can be suitable for three-dimensional measurement application in the field of machine vision and three-dimensional grabbing and positioning application in the field of industrial automation.

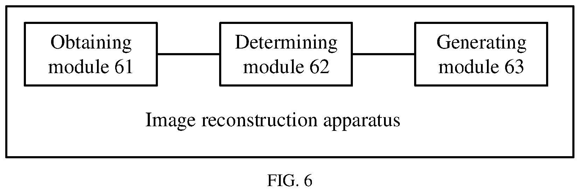

Based on the same concept as the foregoing methods, an embodiment of the disclosure provides an image reconstruction apparatus, applied to a three-dimensional imaging device, where the three-dimensional imaging device includes a first camera, a second camera, and a multi-line laser. As shown in FIG. 6, FIG. 6 is a schematic structural diagram of the apparatus. The apparatus may include an obtaining module 61, a determining module 62, and a generating module 63.

The obtaining module 61 is configured to: when the multi-line laser projects N lines of line-structured light onto a tested object, obtain a first original image of the tested object captured by the first camera, and a second original image of the tested object captured by the second camera, where N is a positive integer greater than 1.

The determining module 62 is configured to determine a first target image corresponding to the first original image and a second target image corresponding to the second original image, where the first target image includes N first light-emitting areas corresponding to the N lines of line-structured light, and the second target image includes N second light-emitting areas corresponding to the N lines of line-structured light; determine a first light strip centerline corresponding to each of the first light-emitting areas in the first target image, and a second light strip centerline corresponding to each of the second light-emitting areas in the second target image; determine a plurality of key point pairs based on all the first light strip centerlines and the second light strip centerlines, where for each of the plurality of key point pairs, the key point pair includes a first pixel in the first light strip centerline and a second pixel in the second light strip centerline, and the first pixel and the second pixel are pixels corresponding to a same location point on the tested object; and determine, for each of the plurality of key point pairs, a three-dimensional point corresponding to the key point pair based on the key point pair and camera calibration parameters.

The generating module 63 is configured to generate a three-dimensional reconstructed image of the tested object based on the three-dimensional points corresponding to the plurality of key point pairs.

In some examples, when determining the first target image corresponding to the first original image and the second target image corresponding to the second original image, the determining module 62 is specifically configured to: determine the first original image as the first target image, and determine the second original image as the second target image; or perform binocular correction on the first original image and the second original image to obtain the first target image corresponding to the first original image and the second target image corresponding to the second original image, where the binocular correction is used to enable a same location point on the tested object to have a same pixel height in the first target image and the second target image.

In some examples, when determining the plurality of key point pairs based on all the first light strip centerlines and the second light strip centerlines, the determining module 62 is specifically configured to: for each line of the N lines of line-structured light, determine a target first light strip centerline and a target second light strip centerline corresponding to this line of line-structured light from all the first light strip centerlines and the second light strip centerlines; for each first pixel in the target first light strip centerline, project the first pixel to the second target image to obtain a projected pixel corresponding to the first pixel, and select a second pixel corresponding to the projected pixel from the target second light strip centerline; then generate a key point pair based on the first pixel and the second pixel.

In some examples, when selecting the second pixel corresponding to the projected pixel from the target second light strip centerline, the determining module 62 is specifically configured to: determine, from the target second light strip centerline, a pixel having a same pixel height as the projected pixel; in response to one pixel having been determined, select the pixel as the second pixel; in response to at least two pixels having been determined, determine a re-projection error between each of the at least two pixels and the projected pixel, and selecting a pixel with a minimum re-projection error in the at least two pixels as the second pixel.

In some examples, when projecting the first pixel to the second target image to obtain the projected pixel corresponding to the first pixel, the determining module 62 is specifically configured to: obtain a first calibration equation and a second calibration equation corresponding to the line-structured light, where the first calibration equation represents a functional relationship between pixels in the first target image and three-dimensional reconstruction points, and the second calibration equation represents a functional relationship between pixels in the second target image and three-dimensional reconstruction points; convert the first pixel into a target three-dimensional reconstruction point based on the first calibration equation; convert the target three-dimensional reconstruction point into the projected pixel based on the second calibration equation.

In some examples, the three-dimensional imaging device further includes a third camera, and the obtaining module 61 is further configured to obtain a third original image of the tested object captured by the third camera when the multi-line laser projects the N lines of line-structured light onto the tested object. The determining module 62 is further configured to determine a third target image corresponding to the third original image, where the third target image comprises N third light-emitting areas corresponding to the N lines of line-structured light; determine a third light strip centerline corresponding to each of the third light-emitting areas in the third target image; and determine, for each line of the N lines of line-structured light, a target third light strip centerline corresponding to this line of line-structured light from all the third light strip centerlines. For each first pixel in the target first light strip centerline, when projecting the first pixel to the second target image to obtain a projected pixel corresponding to the first pixel, the determining module is specifically configured to: determine, from the target third light strip centerline, a third pixel having a same pixel height as the first pixel; determine a target three-dimensional reconstruction point based on the first pixel, the third pixel, and camera calibration parameters; and convert the target three-dimensional reconstruction point into the projected pixel based on a third calibration equation, where the third calibration equation represents a functional relationship between pixels in the second target image and three-dimensional reconstruction points.

In some examples, the camera calibration parameters include camera internal parameters of the first camera, camera internal parameters of the second camera, and camera external parameters between the first camera and the second camera; when determining the three-dimensional point corresponding to the key point pair based on the key point pair and the camera calibration parameters, the determining module 62 is specifically configured to: perform distortion correction on the first pixel through the camera internal parameters of the first camera, and convert the pixel after the distortion correction into first homogeneous coordinates; and perform distortion correction on the second pixel through the camera internal parameters of the second camera, and convert the pixel after the distortion correction into second homogeneous coordinates; determine, based on the first homogeneous coordinates, the second homogeneous coordinates, the camera internal parameters of the first camera, the camera internal parameters of the second camera, and the camera external parameters, the three-dimensional point corresponding to the key point pair in a triangulation manner.

Based on the same concept as the foregoing methods, an embodiment of the disclosure provides a three-dimensional imaging device, where the three-dimensional imaging device may include a processor and a machine-readable storage medium, and the machine-readable storage medium stores machine-executable instructions executable by the processor; and the processor is configured to execute the machine-executable instructions to implement the image reconstruction methods disclosed in the foregoing embodiments of the disclosure.

Based on the same concept as the foregoing methods, an embodiment of the disclosure further provides a machine-readable storage medium, where the machine-readable storage medium stores a plurality of computer instructions, and when the computer instructions are executed by a processor, the processor is caused to implement the image reconstruction methods disclosed in the foregoing embodiments of the disclosure.

The machine-readable storage medium may be any electronic, magnetic, optical, or other physical storage device, and may contain or store information, such as executable instructions, data, or the like. For example, the machine-readable storage medium may be a random access memory (RAM), a volatile memory, a non-volatile memory, a flash memory, a storage drive (such as a hard disk drive), a solid state drive, any type of storage disk (such as an optical disk or a DVD), or a similar storage medium, or a combination thereof.

The system, apparatus, module or unit illustrated in the foregoing embodiments may be specifically implemented by an entity, or implemented by a product having a certain function. A typical implementation device is a computer, and a specific form of the computer may be a personal computer, a laptop computer, a cellular phone, a camera phone, a smartphone, a personal digital assistant, a media player, a navigation device, an email transceiver device, a game console, a tablet computer, a wearable device, or a combination of any of these devices.

For ease of description, the foregoing apparatus is described by dividing functions into various units. Certainly, functions of the units may be implemented in one or more pieces of software and / or hardware when implementing the disclosure.

Those skilled in the art should understand that the embodiments of the disclosure may be provided as a method, a system, or a computer program product. Thus, the present application may take the form of an entirely hardware embodiment, an entirely software embodiment, or an embodiment combining software and hardware aspects. Moreover, the embodiments of the present application may take the form of a computer program product implemented on one or more computer usable storage media (including but not limited to magnetic disk storage, CD-ROM, optical storage, etc.) including computer usable program codes.

The disclosure is described with reference to flowchart diagrams and / or block diagrams of methods, devices (systems), and computer program products according to embodiments of the disclosure. It should be understood that each process and / or block in the flowchart and / or block diagram, and a combination of processes and / or blocks in the flowchart and / or block diagram may be implemented by computer program instructions. These computer program instructions may be provided to a processor of a general purpose computer, a special purpose computer, an embedded processor or other programmable data processing apparatus to generate a machine, so that the instructions executed by the processor of the computer or other programmable data processing apparatus generate an apparatus for implementing functions specified in one or more processes in the flowchart and / or one or more blocks in the block diagram.

Moreover, these computer program instructions may also be stored in a computer readable memory that can direct a computer or other programmable data processing apparatus to work in a specific manner, so that the instructions stored in the computer readable memory generate an article of manufacture including an instruction apparatus, and the instruction apparatus implements functions specified in one or more processes in the flowchart and / or one or more blocks in the block diagram.

These computer program instructions may also be loaded onto a computer or other programmable data processing apparatus, so that a series of operation steps are performed on the computer or other programmable data processing apparatus to generate a computer-implemented process, so that the instructions executed on the computer or other programmable data processing apparatus provide steps for implementing functions specified in one or more processes in the flowchart and / or one or more blocks in the block diagram.

The foregoing is merely an embodiment of the disclosure, and is not intended to limit the disclosure. For those skilled in the art, the present application may have various modifications and variations. Any modifications, equivalent substitutions, improvements, etc. made within the spirit and principle of the present application shall fall within the scope of the claims of the present application.

## Claims

1. An image reconstruction method, applied to a three-dimensional imaging device comprising a first camera, a second camera and a multi-line laser, the method comprising:
in a case where the multi-line laser projects N lines of line-structured light onto a tested object,
obtaining a first original image of the tested object captured by the first camera, and a second original image of the tested object captured by the second camera, wherein N is a positive integer greater than 1; and
determining a first target image corresponding to the first original image and a second target image corresponding to the second original image, wherein the first target image includes N first light-emitting areas corresponding to the N lines of line-structured light, and the second target image includes N second light-emitting areas corresponding to the N lines of line-structured light;
determining a first light strip centerline corresponding to each of the first light-emitting areas in the first target image, and a second light strip centerline corresponding to each of the second light-emitting areas in the second target image;
determining a plurality of key point pairs based on all the first light strip centerlines and the second light strip centerlines, wherein for each of the plurality of key point pairs, the key point pair includes a first pixel in the first light strip centerline and a second pixel in the second light strip centerline, and the first pixel and the second pixel are pixels corresponding to a same location point on the tested object;
determining, for each of the plurality of key point pairs, a three-dimensional point corresponding to the key point pair based on the key point pair and camera calibration parameters;
generating a three-dimensional reconstructed image of the tested object based on the three-dimensional points corresponding to the plurality of key point pairs.

2. The method according to claim 1, wherein determining the first target image corresponding to the first original image and the second target image corresponding to the second original image comprises:
determining the first original image as the first target image, and determining the second original image as the second target image; or
performing binocular correction on the first original image and the second original image to obtain the first target image corresponding to the first original image and the second target image corresponding to the second original image, wherein the binocular correction is used to enable a same location point on the tested object to have a same pixel height in the first target image and the second target image.

3. The method according to claim 1 or 2, wherein determining the plurality of key point pairs based on all the first light strip centerlines and the second light strip centerlines comprises:
for each line of the N lines of line-structured light, determining a target first light strip centerline and a target second light strip centerline corresponding to this line of line-structured light from all the first light strip centerlines and the second light strip centerlines;
for each first pixel in the target first light strip centerline, projecting the first pixel to the second target image to obtain a projected pixel corresponding to the first pixel, and selecting a second pixel corresponding to the projected pixel from the target second light strip centerline;
generating a key point pair based on the first pixel and the second pixel.

4. The method according to claim 3, wherein selecting the second pixel corresponding to the projected pixel from the target second light strip centerline comprises:
determining, from the target second light strip centerline, a pixel having a same pixel height as the projected pixel;
in response to one pixel having been determined, selecting the pixel as the second pixel;
in response to at least two pixels having been determined, determining a re-projection error between each of the at least two pixels and the projected pixel, and selecting a pixel with a minimum re-projection error in the at least two pixels as the second pixel.

5. The method according to claim 3, wherein projecting the first pixel to the second target image to obtain the projected pixel corresponding to the first pixel comprises:
obtaining a first calibration equation and a second calibration equation corresponding to the line-structured light, wherein the first calibration equation represents a functional relationship between pixels in the first target image and three-dimensional reconstruction points, and the second calibration equation represents a functional relationship between pixels in the second target image and three-dimensional reconstruction points;
converting the first pixel into a target three-dimensional reconstruction point based on the first calibration equation;
converting the target three-dimensional reconstruction point into the projected pixel based on the second calibration equation.

6. The method according to claim 3, wherein the three-dimensional imaging device further comprises a third camera, and the method further comprises:
obtaining a third original image of the tested object captured by the third camera in the case where the multi-line laser projects the N lines of line-structured light onto the tested object, and determining a third target image corresponding to the third original image, wherein the third target image comprises N third light-emitting areas corresponding to the N lines of line-structured light; determining a third light strip centerline corresponding to each of the third light-emitting areas in the third target image; and determining, for each line of the N lines of line-structured light, a target third light strip centerline corresponding to this line of line-structured light from all the third light strip centerlines;
for each first pixel in the target first light strip centerline, projecting the first pixel to the second target image to obtain the projected pixel corresponding to the first pixel comprises:
determining, from the target third light strip centerline, a third pixel having a same pixel height as the first pixel;
determining a target three-dimensional reconstruction point based on the first pixel, the third pixel, and camera calibration parameters; and
converting the target three-dimensional reconstruction point into the projected pixel based on a third calibration equation, wherein the third calibration equation represents a functional relationship between pixels in the second target image and three-dimensional reconstruction points.

7. The method according to claim 1, wherein
the camera calibration parameters include camera internal parameters of the first camera, camera internal parameters of the second camera, and camera external parameters between the first camera and the second camera;
determining the three-dimensional point corresponding to the key point pair based on the key point pair and the camera calibration parameters comprises:
performing distortion correction on the first pixel through the camera internal parameters of the first camera, and converting the pixel after the distortion correction into first homogeneous coordinates; and performing distortion correction on the second pixel through the camera internal parameters of the second camera, and converting the pixel after the distortion correction into second homogeneous coordinates;
determining, based on the first homogeneous coordinates, the second homogeneous coordinates, the camera internal parameters of the first camera, the camera internal parameters of the second camera, and the camera external parameters, the three-dimensional point corresponding to the key point pair in a triangulation manner.

8. An image reconstruction apparatus, applied to a three-dimensional imaging device, the three-dimensional imaging device comprising a first camera, a second camera and a multi-line laser, the apparatus comprising:
an obtaining module, configured to: in a case where the multi-line laser projects N lines of line-structured light onto a tested object, obtain a first original image of the tested object captured by the first camera, and a second original image of the tested object captured by the second camera, wherein N is a positive integer greater than 1;
a determining module, configured to determine a first target image corresponding to the first original image and a second target image corresponding to the second original image, wherein the first target image includes N first light-emitting areas corresponding to the N lines of line-structured light, and the second target image includes N second light-emitting areas corresponding to the N lines of line-structured light; determine a first light strip centerline corresponding to each of the first light-emitting areas in the first target image, and a second light strip centerline corresponding to each of the second light-emitting areas in the second target image; determine a plurality of key point pairs based on all the first light strip centerlines and the second light strip centerlines, wherein for each of the plurality of key point pairs, the key point pair includes a first pixel in the first light strip centerline and a second pixel in the second light strip centerline, and the first pixel and the second pixel are pixels corresponding to a same location point on the tested object; and determine, for each of the plurality of key point pairs, a three-dimensional point corresponding to the key point pair based on the key point pair and camera calibration parameters; and
a generating module, configured to generate a three-dimensional reconstructed image of the tested object based on the three-dimensional points corresponding to the plurality of key point pairs.

9. The apparatus according to claim 8, wherein when determining the first target image corresponding to the first original image and the second target image corresponding to the second original image, the determining module is specifically configured to:
determine the first original image as the first target image, and determine the second original image as the second target image; or
perform binocular correction on the first original image and the second original image to obtain the first target image corresponding to the first original image and the second target image corresponding to the second original image, wherein the binocular correction is used to enable a same location point on the tested object to have a same pixel height in the first target image and the second target image.

10. The apparatus according to claim 8 or 9, wherein when determining the plurality of key point pairs based on all the first light strip centerlines and the second light strip centerlines, the determining module is specifically configured to:
for each line of the N lines of line-structured light, determine a target first light strip centerline and a target second light strip centerline corresponding to this line of line-structured light from all the first light strip centerlines and the second light strip centerlines;
for each first pixel in the target first light strip centerline, project the first pixel to the second target image to obtain a projected pixel corresponding to the first pixel, and select a second pixel corresponding to the projected pixel from the target second light strip centerline;
generate a key point pair based on the first pixel and the second pixel.

11. The apparatus according to claim 10, wherein when selecting the second pixel corresponding to the projected pixel from the target second light strip centerline, the determining module is specifically configured to:
determine, from the target second light strip centerline, a pixel having a same pixel height as the projected pixel;
in response to one pixel having been determined, select the pixel as the second pixel;
in response to at least two pixels having been determined, determine a re-projection error between each of the at least two pixels and the projected pixel, and selecting a pixel with a minimum re-projection error in the at least two pixels as the second pixel.

12. The apparatus according to claim 10, wherein when projecting the first pixel to the second target image to obtain the projected pixel corresponding to the first pixel, the determining module is specifically configured to:
obtain a first calibration equation and a second calibration equation corresponding to the line-structured light, wherein the first calibration equation represents a functional relationship between pixels in the first target image and three-dimensional reconstruction points, and the second calibration equation represents a functional relationship between pixels in the second target image and three-dimensional reconstruction points;
convert the first pixel into a target three-dimensional reconstruction point based on the first calibration equation;
convert the target three-dimensional reconstruction point into the projected pixel based on the second calibration equation.

13. The apparatus according to claim 10, wherein the three-dimensional imaging device further comprises a third camera,
the obtaining module is further configured to obtain a third original image of the tested object captured by the third camera in the case where the multi-line laser projects the N lines of line-structured light onto the tested object;
the determining module is further configured to determine a third target image corresponding to the third original image, wherein the third target image comprises N third light-emitting areas corresponding to the N lines of line-structured light; determine a third light strip centerline corresponding to each of the third light-emitting areas in the third target image; and determine, for each line of the N lines of line-structured light, a target third light strip centerline corresponding to this line of line-structured light from all the third light strip centerlines; and
for each first pixel in the target first light strip centerline, when projecting the first pixel to the second target image to obtain a projected pixel corresponding to the first pixel, the determining module is specifically configured to: determine, from the target third light strip centerline, a third pixel having a same pixel height as the first pixel; determine a target three-dimensional reconstruction point based on the first pixel, the third pixel, and camera calibration parameters; and convert the target three-dimensional reconstruction point into the projected pixel based on a third calibration equation, wherein the third calibration equation represents a functional relationship between pixels in the second target image and three-dimensional reconstruction points.

14. The apparatus according to claim 8, wherein
the camera calibration parameters include camera internal parameters of the first camera, camera internal parameters of the second camera, and camera external parameters between the first camera and the second camera;
when determining the three-dimensional point corresponding to the key point pair based on the key point pair and the camera calibration parameters, the determining module is specifically configured to:
perform distortion correction on the first pixel through the camera internal parameters of the first camera, and convert the pixel after the distortion correction into first homogeneous coordinates; and perform distortion correction on the second pixel through the camera internal parameters of the second camera, and convert the pixel after the distortion correction into second homogeneous coordinates;
determine, based on the first homogeneous coordinates, the second homogeneous coordinates, the camera internal parameters of the first camera, the camera internal parameters of the second camera, and the camera external parameters, the three-dimensional point corresponding to the key point pair in a triangulation manner.

15. A three-dimensional imaging device, comprising: a processor and a machine-readable storage medium storing machine-executable instructions executable by the processor; the processor being configured to execute the machine-executable instructions to implement the method according to any one of claims 1 to 7.
